# EUROPEAN PATENT APPLICATION

(11) **EP 1 705 947 A1**
(43) Date of publication of application: **27.09.2006**
(21) Application number: 06251057.3
(22) Date of filing: 28.02.2006
(51) Int. Cl.: H04Q 7/38

(54) **Method for selecting a carrier channel based on channel capability**

(30) Priority: 23.03.2005 US 87110
(71) Applicant: LUCENT TECHNOLOGIES INC., Murray Hill, New Jersey 07974-0636 (US)
(72) Inventor: Bi, Qi, Morris Plains, New Jersey 07950 (US); Yang, Yang, Parsippany, New Jersey 07054 (US); Zhu, Lily H., Parsippany, New Jersey 07054 (US)
(74) Representative: Cockayne, Gillian

(57) **Abstract**

The present invention provides a method of wireless communication with at least one mobile unit. The method includes providing information indicative of at least one channel and at least one channel capability associated with said at least one channel.

## Description

### BACKGROUND OF THE INVENTION

### 1. FIELD OF THE INVENTION

This invention relates generally to communication systems, and, more particularly, to wireless communication systems.

### 2. DESCRIPTION OF THE RELATED ART

Wireless communications systems typically include one or more base stations that can establish wireless communications links with mobile units. Base stations may also be referred to as node-Bs or access networks, and mobile units may also be referred to as access terminals or user equipment. Exemplary mobile units may include mobile telephones, personal data assistants, smart phones, text messaging devices, laptop computers, desktop computers, and the like. To form the wireless communications link between a mobile unit and a base station, the mobile unit accesses a list of available channels (or carriers) in an overhead message broadcast by the base station. The mobile unit applies a hash algorithm to the channel list to select one of the channels as the carrier channel for the wireless communications link. Once the mobile unit has selected a channel, the mobile unit may send a request to the base station to form the wireless communications link using the selected channel.

Base stations may provide channels that have different capabilities. For example, a base station in an Evolved, Data-Optimized (EVDO) network may provide channels that operate according to an EVDO Revision 0 protocol, an EVDO Revision A protocol, or both. EVDO Revision A is an upgraded version of EVDO Revision 0, and provides a number of air interface enhancements to traffic channels, control channels, and access channels that operate according to EVDO revision A. Legacy mobile units that operate according to an EVDO Revision 0 protocol may establish wireless communications links with the base station using one of the channels that operates according to the EVDO Revision 0 protocol. Newer mobile units may be capable of establishing wireless communications links according to either the EVDO Revision 0 protocol or the EVDO Revision A protocol.

However, the channel list provided by conventional base stations provides no indication of the capabilities associated with each channel. For example, a conventional channel list does not indicate whether the channels in the list are capable of supporting wireless communications links that follow the EVDO Revision 0 protocol or the EVDO Revision A protocol. Thus, when a conventional mobile unit attempts to select a channel by hashing the conventional channel list, the channel is selected independent of its channel capabilities. For example, a mobile unit that supports EVDO Revision A may select a channel that operates according to EVDO Revision 0, and therefore may not be able to use the EVDO Revision A air interface enhancements, even though channels that operate according to EVDO Revision A may be available. For another example, a mobile unit that supports EVDO Revision 0 may establish a wireless communication link using a channel that operates according to EVDO Revision A, potentially depriving an EVDO Revision A mobile unit of the EVDO Revision A air interface enhancements provided by that channel.

The present invention is directed to addressing the effects of one or more of the problems set forth above.

### SUMMARY OF THE INVENTION

The following presents a simplified summary of the invention in order to provide a basic understanding of some aspects of the invention. This summary is not an exhaustive overview of the invention. It is not intended to identify key or critical elements of the invention or to delineate the scope of the invention. Its sole purpose is to present some concepts in a simplified form as a prelude to the more detailed description that is discussed later.

In one embodiment of the instant invention, a method is provided for wireless communication with at least one mobile unit. The method includes providing information indicative of at least one channel and at least one channel capability associated with said at least one channel.

In another embodiment of the present invention, a method is provided for wireless communication with a base station. The method includes receiving information indicative of at least one channel and at least one channel capability associated with said at least one channel and selecting a channel based upon the information indicative of at least one channel and at least one channel capability associated with said at least one channel.

### BRIEF DESCRIPTION OF THE DRAWINGS

The invention may be understood by reference to the following description taken in conjunction with the accompanying drawings, in which like reference numerals identify like elements, and in which:
Figure 1 shows an exemplary embodiment of a wireless communications system, in accordance with the present invention;
Figures 2A and 2B conceptually illustrate first and second exemplary embodiments of a message that may be used to indicate available channels and the associated channel capabilities, in accordance with the present invention;
Figure 3 conceptually illustrates one exemplary embodiment of a method for selecting channels based on channel capabilities, in accordance with the present invention.

While the invention is susceptible to various modifications and alternative forms, specific embodiments thereof have been shown by way of example in the drawings and are herein described in detail. It should be understood, however, that the description herein of specific embodiments is not intended to limit the invention to the particular forms disclosed, but on the contrary, the intention is to cover all modifications, equivalents, and alternatives falling within the spirit and scope of the invention as defined by the appended claims.

### DETAILED DESCRIPTION OF SPECIFIC EMBODIMENTS

Illustrative embodiments of the invention are described below. In the interest of clarity, not all features of an actual implementation are described in this specification. It will of course be appreciated that in the development of any such actual embodiment, numerous implementation-specific decisions should be made to achieve the developers' specific goals, such as compliance with system-related and business-related constraints, which will vary from one implementation to another. Moreover, it will be appreciated that such a development effort might be complex and time-consuming, but would nevertheless be a routine undertaking for those of ordinary skill in the art having the benefit of this disclosure.

Portions of the present invention and corresponding detailed description are presented in terms of software, or algorithms and symbolic representations of operations on data bits within a computer memory. These descriptions and representations are the ones by which those of ordinary skill in the art effectively convey the substance of their work to others of ordinary skill in the art. An algorithm, as the term is used here, and as it is used generally, is conceived to be a self-consistent sequence of steps leading to a desired result. The steps are those requiring physical manipulations of physical quantities. Usually, though not necessarily, these quantities take the form of optical, electrical, or magnetic signals capable of being stored, transferred, combined, compared, and otherwise manipulated. It has proven convenient at times, principally for reasons of common usage, to refer to these signals as bits, values, elements, symbols, characters, terms, numbers, or the like.

It should be borne in mind, however, that all of these and similar terms are to be associated with the appropriate physical quantities and are merely convenient labels applied to these quantities. Unless specifically stated otherwise, or as is apparent from the discussion, terms such as "processing" or "computing" or "calculating" or "determining" or "displaying" or the like, refer to the action and processes of a computer system, or similar electronic computing device, that manipulates and transforms data represented as physical, electronic quantities within the computer system's registers and memories into other data similarly represented as physical quantities within the computer system memories or registers or other such information storage, transmission or display devices.

Note also that the software implemented aspects of the invention are typically encoded on some form of program storage medium or implemented over some type of transmission medium. The program storage medium may be magnetic (e.g., a floppy disk or a hard drive) or optical (e.g., a compact disk read only memory, or "CD ROM"), and may be read only or random access. Similarly, the transmission medium may be twisted wire pairs, coaxial cable, optical fiber, or some other suitable transmission medium known to the art. The invention is not limited by these aspects of any given implementation.

The present invention will now be described with reference to the attached figures. Various structures, systems and devices are schematically depicted in the drawings for purposes of explanation only and so as to not obscure the present invention with details that are well known to those skilled in the art. Nevertheless, the attached drawings are included to describe and explain illustrative examples of the present invention. The words and phrases used herein should be understood and interpreted to have a meaning consistent with the understanding of those words and phrases by those skilled in the relevant art. No special definition of a term or phrase, *i.e.,* a definition that is different from the ordinary and customary meaning as understood by those skilled in the art, is intended to be implied by consistent usage of the term or phrase herein. To the extent that a term or phrase is intended to have a special meaning, *i.e.,* a meaning other than that understood by skilled artisans, such a special definition will be expressly set forth in the specification in a definitional manner that directly and unequivocally provides the special definition for the term or phrase.

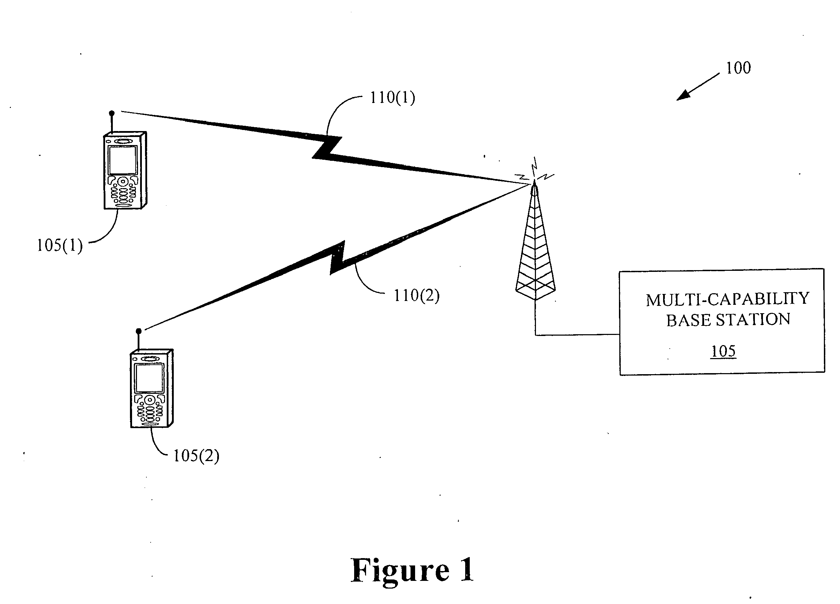

Referring now to Figure 1, an exemplary embodiment of a wireless communication system 100 is shown. In the illustrated embodiment, the wireless communications system 100 includes a multi-capability base station 105 that may form one or more wireless communications links 110(1-2) with one or more mobile units 115(1-2). Exemplary mobile units may include mobile telephones, personal data assistants, smart phones, text messaging devices, laptop computers, desktop computers, and the like. Although a single multi-capability base station 105 and two mobile units 115 (1-2) are shown in Figure 1, persons of ordinary skill in the art should appreciate that the present invention is not limited to this illustrative embodiment. In alternative embodiments, any desirable number of base stations 105 and/or mobile units 115 may be used. For example, the wireless communications system 100 may include several multi-capability base stations 105 that provide service to mobile units 115 in one or more geographic areas or cells. For another example, the wireless communications system 100 may include a plurality of single-capability base stations 105, each of which may provide wireless connectivity to mobile units 115 in a geographic area using a different capability.

As used herein, the term "capability" refers to one or more protocols that may be used to form the wireless communications links 110(1-2), as well as the various features that may be provided to mobile units 115(1-2) by the base station 105. For example, the multi-capability base station 105 may be capable of forming the wireless communication links 110(1-2) with the mobile units 115(1-2) according to a version of a Code Division Multiple Access 2000 (CDMA 2000) protocol that is commonly referred to as an Evolved, Data Optimized (EVDO) protocol, revision 0. The multi-capability base station 105 may also be capable of forming the wireless communication links 110(1-2) with the mobile units 115(1-2) according to an upgraded version of the Evolved, Data Optimized (EVDO) protocol that is commonly referred to as EVDO, revision A. The upgraded version EVDO, revision A, can provide enhanced features, such as enhanced control and/or access channels. However, persons of ordinary skill in the art having benefit of the present disclosure should appreciate that the present invention is not limited to EVDO, revisions 0 and A. In alternative embodiments, the multi-capability base station 105 may use different capabilities and/or additional capabilities.

In the illustrated embodiment, the mobile unit 115(1) is only capable of forming the wireless communications link 110(1) using a first capability of the multi-capability base station 105. For example, the mobile unit 115(1) may only be capable of forming the wireless communications link 110(1) according to EVDO, revision 0. Since EVDO, revision 0 is an earlier version of the EVDO protocol, the mobile unit 115(1) may be referred to as a legacy device. In contrast, the mobile unit 115(2) shown in Figure 1 is capable of forming the wireless communications link 110(2) using the first capability and one or more additional capabilities of the multi-capability base station 105. For example, the mobile unit 115(2) may be capable of forming the wireless communications link 110(2) using either the EVDO, revision 0 protocol or the EVDO, revision A protocol.

The multi-capability base station 105 is able to form the wireless communications links 110(1-2) on a plurality of channels. The channels may be associated with separate channel frequencies. In one embodiment, a portion of the plurality of channels is associated with one capability of the multi-capability base station 105. For example, the multi-capability base station 105 may establish wireless communications links 110 (1-2) using EVDO, revision 0 over a first portion of channels that includes one or more traffic channels. Another portion of the plurality of channels is associated with another capability of the multi-capability base station 105. For example, the multi-capability base station 105 may establish wireless communications links 110 (1-2) using EVDO, revision A over a second portion of channels that includes one or more traffic channels.

In operation, the multi-capability base station 105 provides information indicative of the available channels and the channel capabilities associated with each channel. For example, the multi-capability base station 105 may broadcast a signal that includes an overhead message indicating the available channels and the associated channel capabilities over a broadcast channel. The mobile units 115(1-2) may access the provided information and use this information to select one of the channels to be used for the wireless communications link 110(1-2), as will be discussed in detail below. The selected channel may then be used to form the wireless communications link 110 (1-2).

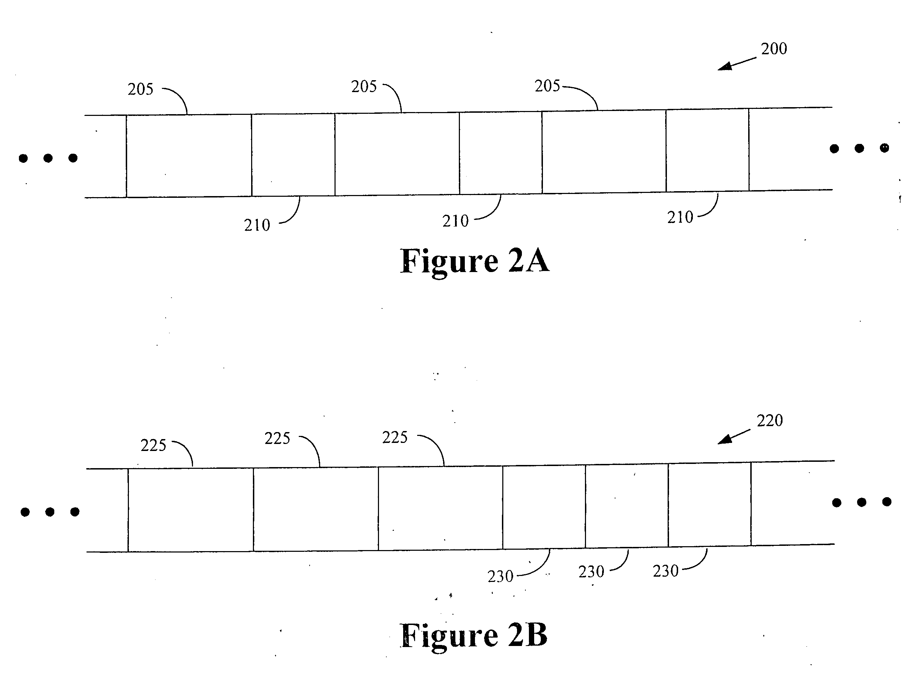

Figure 2A conceptually illustrates a first exemplary embodiment of a portion of a message 200 that may be used to indicate available channels and the associated channel capabilities. In the illustrated embodiment, the message 200 is an overhead message 200 that may be broadcast by a base station. The message 200 includes one or more fields 205 that include information indicative of the available channels. For example, the fields 205 may include a channel number, a channel frequency, and the like. The message 200 also includes one or more fields 210 to include information indicative of the associated channel capability. For example, the fields 210 may include a single bit that may be set to 0 to indicate EVDO, revision 0, and may be set to 1 to indicate EVDO, revision A. However, in alternative embodiments, the fields 210 may include additional bits to indicate additional capabilities. In the first exemplary embodiment, the fields 205, 210 are interleaved so that each field 210 includes information indicating the capabilities of the channel indicated by the information in an adjacent field 205.

Figure 2B conceptually illustrates a second exemplary embodiment of a portion of a message 220 that may be used to indicate available channels and the associated channel capabilities. In the illustrated embodiment, the message 220 is an overhead message 220 that may be broadcast by a base station. The message 220 includes one or more fields 225 that include information indicative of the available channels, e.g. a channel number, a channel frequency, and the like. The message 220 also includes one or more fields 230 to include information indicative of the associated channel capability, as discussed above. In the second exemplary embodiment, the fields 225 indicating the available channels are provided before the fields 230 indicating the channel capabilities.

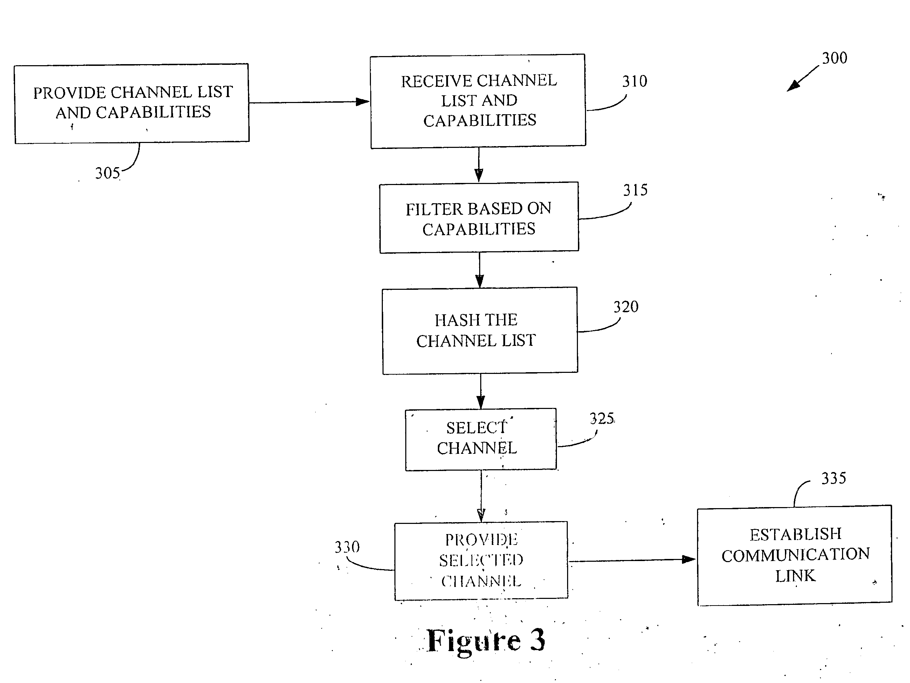

Figure 3 conceptually illustrates one exemplary embodiment of a method 300 for selecting channels based on channel capabilities. In the illustrated embodiment, a list of channels and their associated capabilities is provided (at 305). For example, information indicative of the available channels and their associated capabilities shown in Table 1 may be provided (at 305). In the embodiment shown in Table 1, channel number 1 uses a channel frequency, υ₁, and is capable of forming wireless communications links using EVDO, revision 0, as indicated by the entry in the channel capability row. Channel number 2 uses a channel frequency, υ₂, and is capable of forming wireless communications links using EVDO, revision A, and channel number 3 uses a channel frequency, υ₃, and is capable of forming wireless communications links using EVDO, revision A. In one embodiment, an overhead message including information indicated of the entries in Table 1 may be provided (at 305).

**Table 1**

| CHANNEL NUMBER | CHANNEL FREQUENCY | CHANNEL CAPABILITY |
|---|---|---|
| 1 | υ₁ | EVDO, Rev. 0 |
| 2 | υ₂ | EVDO, Rev. A |
| 3 | υ₃ | EVDO, Rev. A |

One or more mobile units may receive (at 310) the list of channels in their associated capabilities. For example, a mobile unit may receive (at 310) an overhead message provided on a broadcast channel when the mobile unit attempts to initiate a wireless communications link. In one embodiment, the channel list is filtered (at 315) based on the channel capabilities. For example, if the mobile unit is capable of using EVDO, revision A, then the mobile unit may filter (at 315) the channel list to select the channels from the channel list that are also capable of using EVDO, revision A. However, persons of ordinary skill in the art should appreciate that filtering (at 315) is an optional steps and may not be included in some embodiment of the present invention.

The channel list may then be hashed (at 320) based on the channel capabilities. In one embodiment, a filtered channel list may be hashed (at 320). Alternatively, the hashing algorithm may include a hashing bias (which may be configurable) that determines the extent of hashing bias towards channels that have channel capabilities that correspond to the mobile units and/or base stations. For example, if the mobile unit is capable of using EVDO, revision A, then the mobile unit may hash (at 320) the channel is using a hashing bias that biases the hash towards channels that are also capable of using EVDO, revision A. In various alternative embodiments, the hashing bias may be determined using an implicit and/or explicit preference parameter, which may be included in an overhead message.

A channel is then selected (at 325) from the channel list based on the hashed channel list. In one embodiment, the channel is selected (at 325) based on a rule determined for the mobile unit and/or the base station. For example, if a mobile unit is capable of using EVDO, revision A, then the mobile unit may implement a rule that requires the mobile unit to select (at 325) a channel that is also capable of using EVDO, revision A. However, persons of ordinary skill in the art should appreciate that the present invention does not require any particular selection of channels. For example, if a mobile unit is capable of using EVDO, revision A, but no EVDO, revision A, channels are available, the mobile unit may select (at 325) a channel that uses EVDO, revision 0.

The selected channel may be provided (at 330), e.g. to a base station. In one embodiment, an indication of the selected channel may be provided (at 330) to the base station on an access channel. A wireless communications link may then be established (at 335) using the selected channel. For example, a wireless communications link between a mobile unit and the base station may be established (at 335) on a selected traffic channel.

Operation of a wireless communications network may be improved by providing an indication of the capabilities of available channels, which may be used to select a channel for a wireless communications link between a mobile unit and a base station. In one embodiment, the likelihood that the mobile unit will be able to take advantage of all of the features provided by the base station may be increased by reducing the probability that the mobile unit may form the wireless communications link with the base station according to a capability of the base station that provides fewer features. For example, mobile units that may operate according to EVDO, revision A, may use the channel capabilities to select channels that also operate according to EVDO, revision A, thereby allowing the mobile unit to take advantage of the enhancements provided by EVDO, revision A. The performance of latency sensitive applications, such as Voice over Internet Protocol (VoIP), Push-to-Talk (PTT), and the like, may be improved by using the channel capabilities to select appropriate channels. In particular, the call setup performance of latency sensitive applications may be improved by increasing the likelihood that these applications will be able to use the enhanced access/control channel features provided by EVDO, revision A.

The development complexity of the wireless communications system may be reduced in some contexts. For example, since an indication of the capabilities of the various channels are provided to mobile units, base stations may be upgraded by simply co-locating EVDO, revision 0, and EVDO, revision A, applications, thereby reducing the need for new hardware and/or software. Furthermore, since it may not be necessary to perform as many cross-carrier traffic assignments, the latency of cross-carrier traffic assignments due to capability mismatches between the base stations and the mobile units may also be reduced. The call drop rate associated with cross-carrier traffic assignments may also be reduced.

The particular embodiments disclosed above are illustrative only, as the invention may be modified and practiced in different but equivalent manners apparent to those skilled in the art having the benefit of the teachings herein. Furthermore, no limitations are intended to the details of construction or design herein shown, other than as described in the claims below. It is therefore evident that the particular embodiments disclosed above may be altered or modified and all such variations are considered within the scope and spirit of the invention. Accordingly, the protection sought herein is as set forth in the claims below.

## Claims

1. A method of wireless communication with at least one mobile unit, comprising:
providing information indicative of at least one channel and at least one channel capability associated with said at least one channel.

2. The method of claim 1, wherein providing the information indicative of said at least one channel and said at least one channel capability comprises broadcasting an overhead message including the information indicative of said at least one channel and said at least one channel capability associated with said at least one channel, wherein broadcasting the overhead message comprises broadcasting an overhead message including at least one field indicative of said at least one channel and at least one field indicative of said channel capability, and wherein broadcasting the overhead message comprises broadcasting the overhead message on at least one broadcast channel.

3. The method of claim 1, comprising receiving information indicative of a channel selected by the mobile unit based on said information indicative of at least one channel and at least one channel capability associated with said at least one channel, wherein said at least one channel comprises a plurality of channels, and wherein receiving the information indicative of the channel comprises receiving information indicative of a channel selected from the plurality of channels, wherein receiving the information indicative of the channel comprises receiving information indicative of a traffic channel.

4. The method of claim 3, comprising establishing a wireless communications link with the mobile unit on the selected channel.

5. A method of wireless communication with a base station, comprising:
receiving information indicative of at least one channel and at least one channel capability associated with said at least one channel; and
selecting a channel based upon the information indicative of at least one channel and at least one channel capability associated with said at least one channel.

6. The method of claim 5, wherein receiving the information indicative of said at least one channel and said at least one channel capability comprises receiving an overhead message including the information indicative of said at least one channel and said at least one channel capability associated with said at least one channel, the overhead message having been broadcast by the base station, wherein receiving the overhead message comprises receiving an overhead message including at least one field indicative of said at least one channel and at least one field indicative of said channel capability, wherein receiving the overhead message comprises receiving the overhead message on at least one broadcast channel.

7. The method of claim 5, wherein selecting the channel comprises hashing said at least one channel.

8. The method of claim 5, wherein selecting the channel comprises filtering said at least one channel based on the associated channel capability, wherein selecting the channel comprises hashing the filtered channels.

9. The method of claim 5, comprising providing information indicative of the selected channel, wherein providing the information indicative of the channel comprises providing information indicative of a traffic channel.

10. The method of claim 5, comprising establishing a wireless communications link with the base station on the selected channel.
